# EUROPÄISCHE PATENTSCHRIFT

(11) **EP 1 653 142 B1**
(45) Veröffentlichungstag und Bekanntmachung des Hinweises auf die Patenterteilung: **21.01.2015**
(21) Anmeldenummer: 05023515.9
(22) Anmeldetag: 27.10.2005
(51) Int. Cl.: F16L 13/14, F16L 33/207

(54) **Pressverbindung**
Press-fitting
Raccord à sertissage

(30) Priorität: 28.10.2004 DE 102004052390
(43) Veröffentlichungstag der Anmeldung: 03.05.2006
(73) Patentinhaber: FRÄNKISCHE ROHRWERKE Gebr. Kirchner GmbH & Co. KG, 97486 Königsberg (DE)
(72) Erfinder: Heiduk, Ines, 97437 Hassfurt-Wülflingen (DE); Welsch, Thomas, 97437 Hassfurt (DE); Beschorner, Michael, 99195 Markvippach (DE)
(74) Vertreter: Feller, Frank

(56) Entgegenhaltungen:
- EP-A- 1 096 194
- WO-A-2004/063615
- DE-A1- 19 856 999
- DE-C1- 10 010 573
- DE-C1- 10 137 078

## Beschreibung

Die Erfindung betrifft eine Pressverbindung zum Anschließen von Kunststoffrohren mit einer Stützhülse, auf die ein anzuschließendes Rohr aufgeschoben wird, mit einer Presshülse, durch deren Verformung das Kunststoffrohr auf der Stützhülse festgelegt wird sowie mit einem Kunststoffrohr, das in einen zylindrischen Spalt zwischen der Stützhülse und der Presshülse eingeführt wird, gemäß dem Anspruch 1.

Eine im Stand der Technik bekannte Pressverbindung, die auf die Verpressung mittels bestimmt ausgebildeter Pressbacken einer Presszange ausgerichtet ist, weist eine Dichtungskonstruktion auf, bei der die Dichtungen vollkommen eben in Aufnahmenuten aufgenommen sind. Diese Dichtungen ragen nicht über die Stützhülse hinaus, so dass eine besonders heftige Verformung der Presshülse durchgeführt werden muss, um das Material eines zu verpressenden Kunststoffrohres oder Kunststoff-Metall-Kunststoff-Verbundrohres, kurz Verbundrohr genannt, in eine ausreichende Anlage zu den O-Ring-Dichtungen zu verbringen. Hierdurch können die O-Ringdichtungen leicht beschädigt werden und die Presszange muss einen besonders hohen Pressdruck aufbringen, der die Presszange sehr beansprucht. Durch diese gemäß der DE 101 37 078 C1 vorgeschlagene Ausbildung soll es ermöglicht werden, dass ein in den Zwischenraum zwischen die Presshülse und die Stützhülse einzuführendes Rohr an seiner Stirnfläche nicht entgratet werden muss, da die vollkommen in die Nuten aufgenommenen O-Ringdichtungen durch die nicht entgratete Stirnfläche der einzuschiebenden Kunststoffrohre nicht verletzt werden können.

Gemäß der EP 1 278 001 A2 wird eine Pressverbindung vorgeschlagen, die eine Leckagefunktion ermöglichen soll. D.h., wenn ein auf eine Pressverbindung aufgeschobenes Rohr noch nicht durch die Verpressung der Pressverbindung abgedichtet ist, ist eine Leckstelle eingebaut, die es dem Monteur durch den Austritt von Wasser ermöglicht, zu erkennen, dass keine Verpressung vorgenommen wurde. Eine Verpressung kann dann vom Monteur aufgrund dieser Hinweisfunktion in der Form der Leckagefunktion noch vorgenommen werden. Die Leckagefunktion wird hier durch eine Deformation des Rohres bewerkstelligt, was jedoch auch nach der Verpressung zu einer Schwachstelle führen kann, da das Rohr im Bereich der eingebauten Leckagefunktion auch nach der Verpressung eine Schwachstelle aufweist, die über kurz oder lang zu einer Leckage trotz erfolgter Verpressung führen kann.

Aus diversen anderen Druckschriften aus dem Stand der Technik, der EP 1 316 753 A2, der EP 1 096 194 B1 und der EP 1 326 045 A2 sind weitere Verbindungen und insbesondere Pressverbindungen ersichtlich, die allesamt unterschiedliche Geometrien für die Pressbacken des Presswerkzeuges fordern und nicht die Verwendung dieser Presswerkzeuge für eine sichere und dichte Verpressung zulassen.

Die DE 19 856 999 A1 und die DE 10 010 573 C1 offenbaren jeweils eine Pressverbindung für Rohre mit den folgenden Merkmalen: einer Stützhülse, auf die ein aufzuschiebendes Rohr aufgeschoben wird, einer Presshülse, durch deren Verformung das Rohr auf der Stützhülse festgelegt wird; mit einem Rohr, das in einen zylindrischen Spalt zwischen der Stützhülse und der Presshülse eingeführt wird; einem Bund mit einem Anschlag am Ende der Stützhülse, gegen den das Rohr nach dem Aufschieben mit oder ohne Abstand zu liegen kommt; das Rohr einen gleichen oder minimal größeren Innendurchmesser aufweist, verglichen mit dem Außendurchmesser der Stützhülse in einem umfänglichen Bereich der Stützhülse, der axial zur Pressverbindung bzw. der Stützhülse begrenzt ist, so dass dieser auf die Umgebung einer O-Ringdichtung begrenzt ist, wobei die O-Ringdichtung einen minimal größeren Außendurchmesser als die Stützhülse außerhalb des Bereiches hat.

Ferner ist es eine bevorzugte Aufgabe gemäß der Erfindung ein Pressfitting zur Verfügung zu stellen, der mit diversen verschiedenen Presswerkzeugen bzw. Pressbacken von Presswerkzeugen verpresst werden kann, wobei sowohl die Leckagefunktion als auch eine sichere Abdichtung durch die Verpressung ermöglicht werden kann.

Es ist die Aufgabe gemäß der vorliegenden Erfindung, eine Verbindung zum Anschließen von Kunststoffrohren und insbesondere für Verbundrohre zur Verfügung zu stellen, die eine Leckagefunktion ermöglicht, wobei gleichzeitig eine sichere Abdichtung der Verbindung nach dem Verpressen und damit Festlegen des Kunststoffrohres bzw. Verbundrohres ermöglicht wird.

Gemäß der Erfindung wird wenigstens eine der genannten Aufgaben durch eine Pressverbindung gemäß dem Anspruch 1 gelöst. Zweckmäßige Ausführungsformen gehen aus den Unteransprüchen hervor.

Es kann an eine Pressverbindung für Kunststoffrohre gedacht werden, die mit den folgenden Merkmalen ausgebildet ist:
- einer Stützhülse, auf die ein aufzuschiebendes Rohr aufgeschoben wird,
- einer Presshülse, durch deren Verformung das Kunststoffrohr auf der Stützhülse festgelegt wird; mit einem Kunststoffrohr oder Kunststoff-Metall-Kunststoff-Verbundrohr, das in einen zylindrischen Spalt zwischen der Stützhülse und der Presshülse einführbar ist; einem Bund mit einem Anschlag am Ende der Stützhülse, gegen den das Kunststoffrohr nach dem Aufschieben mit oder ohne Abstand zu liegen kommt, dadurch gekennzeichnet, dass
- die Presshülse zwei umfängliche radial auswärts gerichtete Erstreckungen aufweist, die jeweils über einem Bereich der Stützhülse positioniert sind, der eine O-Ringdichtung trägt, wobei
- für eine Verpressung durch eine Presskontur eines Presswerkzeuges bestimmte Umfangsflächen der Presshülse in deren Axialrichtung angeordnet sind, die durch einen Pressvorgang plastisch radial einwärts deformierbar sind.

Gemäß einer bevorzugten Ausführungsform dieser Pressverbindung sind die radial auswärts gerichteten Erstreckungen dimensioniert, um zu Presswerkzeugen mit beliebiger Presskontur zu passen, indem die Erstreckungen vor oder beim Verpressvorgang in Anlage zur Presskontur gelangen, um wenigstens teilweise mit einem Pressdruck beaufschlagbar zu sein.

Gemäß der Erfindung wird das Kunststoffrohr, das mit der Pressverbindung festzulegen ist, einen gleichen oder minimal größeren Innendurchmesser aufweisen, verglichen mit dem Außendurchmesser mit der Stützhülse in einem umfänglichen Bereich der Stützhülse, der axial zur Pressverbindung bzw. der Stützhülse begrenzt ist, so dass dieser auf die Umgebung einer O-Ringdichtung begrenzt ist, wobei die O-Ringdichtung einen minimal größeren Außendurchmesser als die Stützhülse außerhalb des Bereiches hat.

Durch diese Ausgestaltung ist es möglich, mit oder ohne einen Überdruck innerhalb eines Kunststoffrohres das Austreten von Flüssigkeit zu erkennen, so dass ein Handwerker anhand dieses Signals erkennen kann, dass die betreffende Pressverbindung noch nicht verpresst worden ist. Bei dieser Ausgestaltung ist es zwar nötig, das aufzuschiebende und festzulegende Kunststoffrohr zu entgraten, jedoch ist es bei dieser erfindungsgemäßen Ausgestaltung möglich, beim Verpressen der Pressverbindung das Material der Presshülse und damit des Kunststoffrohres nicht so weit radial nach innen auslenken zu müssen, um einen dichtenden Kontakt zwischen den O-Ringdichtungen und dem Innendurchmesser des Kunststoffrohres herzustellen, dass unter Umständen die O-Ringe verletzt werden könnten oder dass die Presszange eine besonders große Presskraft aufzubringen hat. Jedenfalls ist es für eine dichte Verbindung nicht erforderlich, eine größere Menge des Materials des Kunststoffrohres in die Nuten der O-Ringdichtungen hinein zu verpressen.

Vorteilhafterweise hat die Presshülse eine umfängliche, radial auswärts gerichtete Erstreckung, die über dem Bereich der Stützhülse positioniert ist. Dieses Merkmal hat zwei Vorzüge, nämlich einerseits, dass auch Pressbacken für die Verpressung der Pressverbindung verwendet werden können, die keine Pressfläche im Bereich der O-Ringe der Pressverbindung aufweisen, sondern daneben. Durch diesen umfänglichen Erstreckungsbereich der Presshülse kann auch mit einem radial einwärts positionierten Bereich einer Pressbacke eines Presswerkzeuges eine Kraft auf die Presshülse ausgeübt werden, unabhängig davon, dass die Pressflächen der Pressbacken des Presswerkzeuges axial gesehen an einer anderen Stelle angeordnet sind. Der radiale Abstand zwischen dem Presswerkzeug bzw. dessen Pressbacken und der zu verpressenden Oberfläche der Presshülse wird hier nicht durch die Pressflächen der Pressbacken überwunden, sondern durch die radial auswärts gerichtete Erstreckung der Presshülse. Ferner ist es möglich, diese Erstreckung auch zur Justierung der Pressbacken des Presswerkzeuges bzw. der Presszange in axialer Richtung in Bezug auf die Presshülse bzw. die Pressverbindung eingesetzt werden. Weist die radiale Erstreckung beispielsweise zwei ringartig umlaufende Erhöhungen auf, kann ein Positionierungshilfeansatz an dem Innenumfang der Pressbacken genau in den axialen Zwischenraum zwischen den umfänglich verlaufenden Erstreckungen passen, um so von Pressverbindung zu Pressverbindung reversibel die Pressbacken bzw. das Presswerkzeug platzieren zu können.

Vorteilhafterweise hat die Stützhülse einer anderen Ausführungsform an ihrem dem Bund abgewandten Ende einen Außenumfang, der relativ zum Innenumfang des Kunststoffrohres größer ist, um zu dessen Kalibrierung und/oder Entgratung beizutragen. D.h., das entsprechend abgewandte Ende der Stützhülse kann konisch in Aufschubrichtung breiter werden, kann aber auch mit einem gewissen vorgebbaren Radius weiter werden, um das aufzuschiebende Rohr, das gewisse Fertigungstoleranzen aufweist, in Bezug auf die Stützhülse zu kalibrieren. Ferner ist es möglich, in dem Bereich der Kalibrierung Rillen, Riefen oder dgl. vorzusehen, so dass eine besonders scharfe Kante des aufzuschiebenden Rohres bearbeitet werden kann. Hier kann beispielsweise durch einen abspanenden Vorgang oder durch einen abreibenden Vorgang die besonders scharfe Kante eines aufzuschiebenden Kunststoffrohres entschärft werden, wobei sich die Rillen oder dgl. auch mit dem Material des Rohres bzw. dessen Stirnfläche zusetzen können. Die Gefahr einer Verletzung der O-Ringdichtungen kann auf diese Weise auch gemildert werden.

Wie bereits angedeutet, kann die Presshülse eine äußere Kontur aufweisen, die zu einer Anzahl von Pressbacken von Presszangen in eine justierende Korrespondenz bringbar ist. Dabei kann vorteilhafterweise die Presshülse über ein Halteelement, beispielsweise aus Metall oder Kunststoff, am Bund der Pressverbindung gehalten werden, wobei das Halteelement eine Außenkontur aufweist, die zu wenigstens einer Pressbackengeometrie korrespondiert, um eine bezüglich der Verpressungsposition kontrollierte Verpressung der Presshülse gegenüber der Stützhülse vornehmen zu können. Dabei bietet es sich an, dass dieses Halteelement aus durchsichtigem Kunststoff ist, wenigstens eine Öffnung hat, oder dgl., so dass die Lage eines Rohres in dem Zwischenraum zwischen der zylindrischen Stützhülse und der zylindrischen Presshülse nahe dem Bund bzw. am Bund überprüfbar ist. Auch die Presshülse selbst kann mit einer Öffnung versehen sein, so dass die Lage eines Kunststoffrohres vor der Verpressung oder sogar bei der Verpressung in der Pressverbindung erkennbar ist.

Bevorzugt weist der umfängliche Bereich der Stützhülse zwei axial beabstandete Richdichtungen oder O-Ringdichtungen auf. Dementsprechend ist es auch günstig, wenn die Presshülse jeweilige zugeordnete radiale Erstreckungen aufweist, die den Ringdichtungen oder O-Ringdichtungen zuordenbar sind. Natürlich können beide O-Ringdichtungen auch mit einer einzigen umfänglichen, radial auswärts gerichteten Erstreckung verpresst werden, wobei aber eine solche einzelne Erstreckung einer bekannten Pressbackenstruktur, der U-Kontur nicht entspräche, so dass eine Verpressung mit einer solchen Pressbacke nicht möglich wäre.

Zu bevorzugen ist es, wenn zwei O-Ringdichtungen in jeweilige umfängliche Nuten in der Stützhülse aufgenommen sind, wobei die beiden Nuten durch einen umfänglichen Grat getrennt sind, der eine umfängliche Nut aufweist. Diese Struktur des Grats zwischen den O-Ringdichtungen dient zur Bereitstellung einer speziellen Stützkörpergeometrie für die Stützhülse, um bei einer Verpressung mit diversen unterschiedlichen Pressbacken, wie der F-Kontur, der TH-Kontur, der U-Kontur und der B-Kontur, ein definiertes Verpressungsergebnis bereitstellen zu können, wobei die O-Dichtringe nicht zerquetscht oder beschädigt werden dürfen.

Natürlich können beliebig ausgebildete d.h. O-Ringdichtungen im Rahmen der Erfindung eingesetzt werden.

Die erfindungsgemäße Stützhülse weist umfängliche Zacken auf, die in der Nachbarschaft zu dem bzw. zu den O-Ringdichtungen eine geringere radiale Erstreckung aufweisen als entfernt von den O-Ringdichtungen. Auf diese Weise ist es während des Verpressvorganges einfacher, einen Materialtransport beim Verpressen zu ermöglichen, so dass Kunststoffmaterial des Kunststoffrohres bzw. des Verbundrohres in einen dichtenden Kontakt zu den O-Ringdichtungen gelangen kann.

Bevorzugt ist ein umfänglicher Zacken der Stützhülse in Aufschubrichtung des Kunststoffrohres vor der/vor den O-Ringdichtung(en) in Axialrichtung der Stützhülse wenigstens teilweise mit einer geringeren radialen Erstreckung ausgebildet als andere umfängliche Zacken der Stützhülse. Ferner ist es möglich, vorteilhafterweise einen umfänglichen Zacken der Stützhülse in Aufschubrichtung des Kunststoffrohres hinter der/den O-Ringdichtung(en) in Axialrichtung der Stützhülse wenigstens teilweise eine geringere radiale Erstreckung aufweisen zu lassen als andere umfängliche Zacken der Stützhülse. Auch durch eine derartige Ausbildung ist es möglich, durch eine nicht zu intensive Verpressung der Stützhülse einen festen, dauerhaften oder dichten Kontakt zwischen der Innenwand des Kunststoffrohres und den O-Ringdichtungen zu bewerkstelligen.

Da beispielsweise im Hinblick auf die Leckagefunktion der Pressverbindung durchaus auch die Maße der Stützhülse, des Kunststoffrohres und der Presshülse eine Rolle spielen, ist darauf hinzuweisen, dass auch die konkreten Maße durchaus eine erfinderische Qualität aufweisen können, wie sie auch aus der nachfolgenden Figurenbeschreibung bzw. den nachfolgend aufgeführten Figuren hervorgehen.

So sind Kunststoffrohre mit unterschiedlichen Innen- bzw. Außendurchmesser mit unterschiedlichen Fertigungstoleranzen herstellbar. Ein Rohr mit einem Durchmesser von 26 mm kann z.B. innerhalb einer Fertigungstoleranz von 25,8 bis 26,2 mm produziert werden, so dass entsprechend hier ein O-Ring mit einem Außendurchmesser von 25,8 bzw. 25,9 mm zur Verfügung gestellt werden muss, um einen Ringspalt in dem Sinne bereitstellen zu können, dass die gewünschte Leckagefunktion vorteilhaft erreicht wird. Eine Leckagefunktion außerhalb der genannten Maße ist zwar auch möglich, jedoch wird die Funktion in dem genannten Bereich besonders vorteilhaft erreicht. Dementsprechend wir die Leckagefunktion für Rohre mit 16, 20 oder beispielsweise 40 mm Durchmesser in anderer Form erreicht, da einerseits diese Rohre andere Fertigungstoleranzen aufweisen und andererseits dementsprechend die Pressverbindung eine dimensionsmäßige und funktionsmäßige Anpassung erfordert.

Nachfolgend wird die vorliegende Erfindung anhand bevorzugter Ausführungsformen näher erläutert, wobei weitere Merkmale, Vorzüge und Zielsetzungen der Erfindung offenbart werden. In den Darstellungen zeigen:
- Fig. 1: eine erfindungsgemäße Pressverbindung in einem teilweisen axialen Querschnitt mit angedeuteter Pressbacke;

- Fig. 2: die Pressverbindung gemäß Fig. 1 in einem axialen Längsschnitt;
- Fig. 2a bis 2d: die Pressverbindung gemäß Fig. 2 mit unterschiedlichen Pressbackenkonturen von Presswerkzeugen jeweils im axialen Längsschnitt;
- Fig. 3: eine Stützhülse in einer teilweisen Seitenansicht mit Maßangaben in Millimetern;
- Fig. 4: ein Kupplungsstück einer Pressverbindung mit Merkmalen gemäß der Erfindung in einer Seitenansicht;
- Fig. 4a: ein Ausschnitt X gemäß Fig. 4 in einem axialen Längsschnitt;
- Fig. 5: eine Presshülse einer Pressverbindung gemäß der Erfindung in einem teilweisen axialen Längsschnitt mit einer Andeutung der Krafteinwirkung eines Presswerkzeuges;
- Fig. 6: ein teilweiser axialer Längsschnitt durch eine Stützhülse einer Pressverbindung gemäß der Erfindung; und
- Fig. 7: einen axialen Längsschnitt durch eine Stützhülse mit aufgeschobenem Rohr in einer ausgeschnittenen Ansicht.

In den Darstellungen sind gleiche oder wenigstens funktionsgleiche Bestandteile mit gleichen, bzw. einander entsprechenden Bezugszeichen gekennzeichnet.

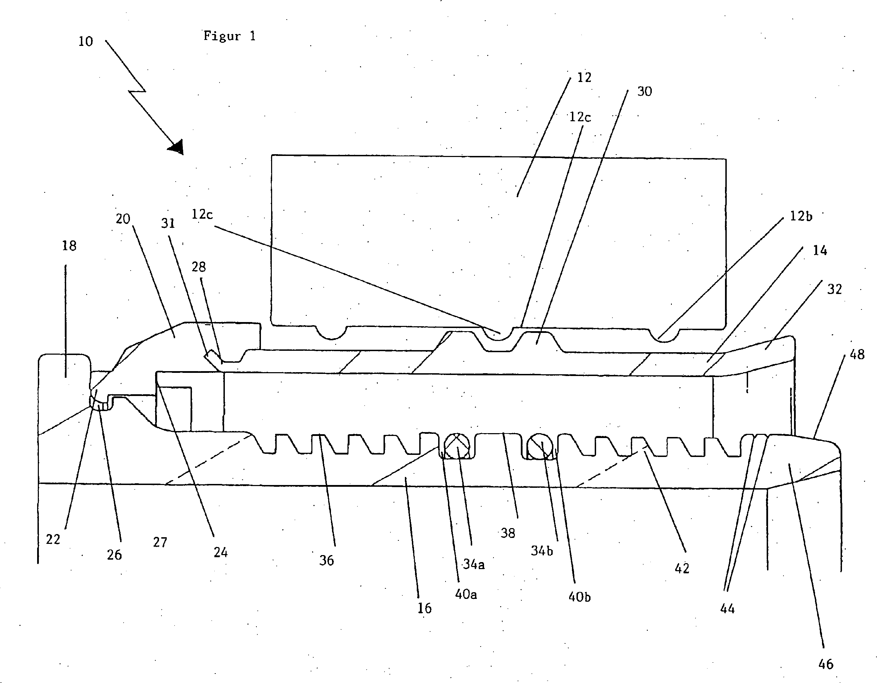

In Fig. 1 ist eine Pressverbindung 10 teilweise mit einer schematisch dargestellten Pressbacke 12 dargestellt. Die Pressbacke 12 weist Presskonturen 12b und eine Positionierungshilfekontur 12a auf. Zurückversetzte Bereiche 12c, denen gegenüber die Presskonturen 12b relativ zur Oberfläche der Presshülse 14 zurückversetzt sind, sind bei einem Verpressvorgang üblicherweise inaktiv, während die Presskonturen die Presshülse plastisch verformen. Anders ist dies bei der Erfindung.

Eine in der Regel zylindrische Presshülse 14 ist über einer korrespondierenden, in der Regel ebenfalls zylindrischen Stützhülse 16 positioniert. Die Presshülse 14 wird durch ein Kunststoffelement 20 gehalten, das in eine Rille 26 an einem Bund 18 der Pressverbindung 10 mit einer Rastschulter 22 eingerastet ist. Das Kunststoffelement 20 kann auch eine Anschlagschulter 24 aufweisen, an die ein Kunststoffrohr bzw. ein Verbundrohr anschlägt, das in den Zwischenraum zwischen die Presshülse 14 und die Stützhülse 16 zur nachfolgenden Verpressung eingeschoben wird.

Die Presshülse 14 hat ein Eingriffselement 28, mit dem die Presshülse 14 in eine korrespondierende Ausnehmung 31 des Kunststoffelementes 20 hineingreift. Zwar ist hier das Kunststoffelement 20 als solches bezeichnet, es kann aber auch in der Form eines Metallringes mit entsprechenden Konturen ausgebildet sein. Das Kunststoffelement 20 kann aus durchsichtigem Material bestehen oder es können Öffnungen für eine Sichtkontrolle zur Lagekontrolle für das Rohr vorgesehen sein. Eine solche Lagekontrolle kann auch in der Presshülse 14 selbst vorgesehen sein, beispielsweise in der Form eines Loches.

Die Presshülse 14 weist ferner auf der Einführseite bzw. Aufschubseite für das Kunststoffrohr oder Verbundrohr einen Erweiterungsbereich 32 auf, so dass das Einführen eines Kunststoffrohres erleichtert werden kann.

Ferner weist die Presshülse 14 radiale, vollumfänglich ausgebildete Erstreckungen 30 auf, die einerseits dazu dienen können, die Positionierung mittels der Erstreckung 12a an dem Formbacken 12 für das Presswerkzeug an der erfindungsgemäßen Pressverbindung zu erleichtern und andererseits dazu, dass durch die Anordnung der Erstreckungen 30 über Dichtungselementen 34a, 34b der Stützhülse 16 im Bereich der Dichtungselemente 34a, 34b, erfindungsgemäß O-Ringdichtungen, eine besonders definierte Verpressung bewerkstelligen lässt. Eine Verpressung gerade in diesem Bereich ist auch deshalb aufgrund dieser Ausgestaltung mit beliebigen Pressbacken möglich, weil die Erstreckungen 30 eine solche radiale Erstreckung aufweisen können, dass unabhängig von der Existenz von Presskonturen 12b eine Verpressung durch eine Pressbacken erzeugt werden kann.

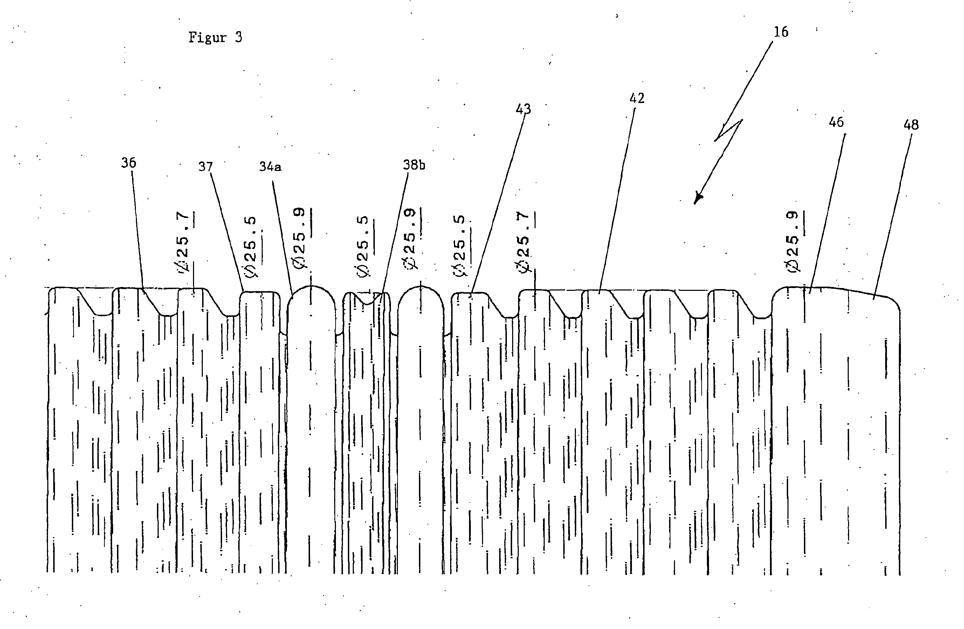

Die Stützhülse 16 weist an ihrem aufschubseitigen Ende eine spezielle Kontur auf, die zur Kalibrierung eines Rohres mit einem bestimmten Durchmesser und einer bestimmten Durchmessertoleranz dient. Dies wird noch genauer unter Bezug auf die Fig. 3 erläutert werden. Die Kontur 48 hat einen in Aufschubrichtung anwachsenden Außendurchmesser, um eine Kalibrierung vorzunehmen. Einschnürungen bzw. Rillen, Kerben 44 oder dgl., können dazu dienen, einen scharfen Rand am Innenumfang eines aufzuschiebenden Rohres teilweise abzutragen und dadurch zu entschärfen, so dass die Verletzung der O-Ringe unwahrscheinlich wird.

Zwischen den O-Ringdichtungen 34a, 34b und dem aufschubseitigen Ende 46 der Stützhülse 16 sind Zacken 42 angeordnet, deren Außendurchmesser niedriger ist, als der größte Außendurchmesser des kalibrierenden Endes 46 der Stützhülse 16. In unmittelbarer Nähe der ersten O-Ringdichtung 34b ist ein Zacken mit geringfügig größerem Außendurchmesser angeordnet, der aber immer noch einen geringfügig kleineren Außendurchmesser wie die O-Ringdichtung 34b aufweist, so dass die O-Ringdichtung 34b nicht vollständig in eine Nut 40b aufgenommen ist, die an die vorderen Zacken der Stützhülse anschließt. Zwischen den O-Ringdichtungen 34a und 34b ist ein Grat 38 angeordnet, der bevorzugt ebenfalls eine wenigstens etwas geringere radiale Erstreckung aufweist, wie die O-Ringdichtungen selbst. Entsprechendes gilt auch für die Nut 40a in Bezug auf die O-Ringdichtung 34a. An die O-Ringdichtung 34a und damit die Nut 40a schließen weitere Zacken 36 an, die gleich aber auch unterschiedlich ausgebildet sein können.

Bei der dargestellten Ausführungsform wird ein Kunststoffrohr, das zwischen die Presshülse 14 und die Stützhülse 16 eingeschoben wird, an den Anschlag 24 des Kunststoffteils 20 anstoßen und wird einen unmittelbaren Kontakt zu dem Bund 18 nicht erhalten, was insbesondere dann wertvoll ist, wenn es sich bei dem Kunststoffrohr um ein Verbundrohr handelt, dessen Metallschicht von dem Metallmaterial der Stützhülse 16 und des Bundes 18 ferngehalten werden soll, um korrosive Erscheinungen zu vermeiden. Natürlich kann die Stützhülse bzw. der Bund ebenfalls mit einer radialen Erstreckung versehen sein, die einen Anschlag bildet, wobei der Anschlag als zu dem Bund 18 zugehörig anzusehen ist.

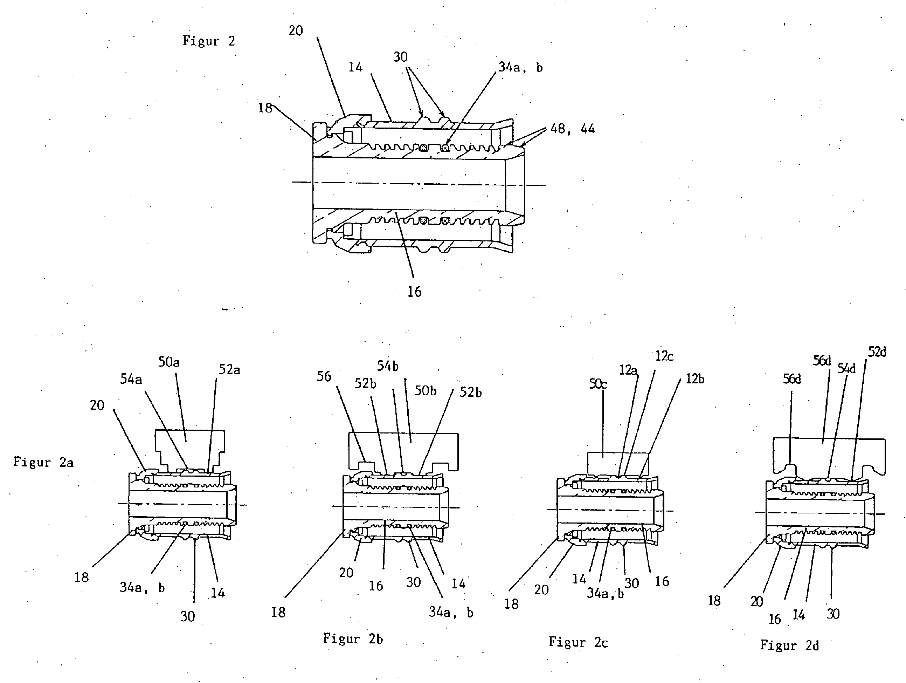

In Fig. 2 ist prinzipiell die Pressverbindung gemäß Fig. 1 dargestellt, wobei hier jedoch die zylindersymmetrische Ausbildung der Elemente besser ersichtlich ist, die unter Bezugnahme auf Fig. 1 im Einzelnen erläutert worden sind. Die Fig. 2a bis 2d zeigen unterschiedliche Geometrien von bekannten Pressbacken und es ist erkennbar, dass mit diesen unterschiedlichen Geometrien eine Verpressung der erfindungsgemäßen Pressverbindung möglich ist, und zwar möglichst mit gleich guten Ergebnissen. Dies ist besonderes vorteilhaft, da der Benutzer der erfindungsgemäßen Pressverbindung natürlich mit seiner bei ihm vorhandenen Pressbackengeometrie, egal von welcher bekannten Art diese ist, auf diese Weise die erfindungsgemäßen Pressverbindung ohne Einbuße an Haltekraft, Zugentlastung, Dichtigkeit und dgl. mehr eine Pressverbindung ausführen kann. Wesentlich ist dabei, dass die radial auswärts gerichteten Erstreckungen 30 dimensioniert, um zu Presswerkzeugen mit beliebiger Presskontur zu passen, indem die Erstreckungen 30 vor oder beim Verpressvorgang in Anlage zur Presskontur gelangen, um wenigstens teilweise mit einem Pressdruck beaufschlagbar zu sein.

In Fig. 2a ist eine F-Kontur 50a schematisch dargestellt, die an ihren Außenbereichen jeweilige Pressstrukturen 52a aufweist, während zwischen den Pressstrukturen 52a ein im Prinzip inaktiver Bereich ist, der nicht für eine Verpressung herangezogen wird. Um auch für eine solche Pressbackengeometrie eine sichere Verpressung sicherstellen zu können, sind die radialen Erstreckungen 30 der Presshülse von Bedeutung, da über diese auch im Bereich der O-Ringdichtungen eine definierte höhere Presskraft auf die Presshülse zu deren Deformation ausgeübt werden kann.

In Fig. 2b ist eine Kontur 50b dargestellt, die gleichermaßen wie die Kontur 50a in Axialrichtung der Pressverbindung symmetrisch ausgebildet ist. Auch hier sind Pressstrukturen 52b vorgesehen, die im Prinzip nicht auf die O-Ringdichtungen 30a, 30b einwirken würden, so dass gerade eine Verpressung im Bereich der Dichtungen nicht erfolgen würde. Dementsprechend haben auch hier wiederum die radialen Erstreckungen 30 auf der Presshülse eine besondere Bedeutung, als nämlich durch die ansonsten prinzipiell für die Verpressung inaktive Oberfläche 54b des Pressbackens 50b wiederum eine Verpressungsfunktion zu erzielen ist. Der Pressbacken 50b weist darüber hinaus eine Justagekontur 56b auf, die aber nicht zum Einsatz gelangt.

Gemäß Fig. 2c wird ein Pressbacken 50c mit einer Kontur angesetzt. Da diese Kontur im Prinzip der in Fig. 1 dargestellten entspricht, soll diese hier nicht weiter erörtert werden. Zu bemerken ist lediglich, dass auch hier die prinzipiell für die Verpressung inaktive Oberfläche 12c des Pressbackens über die Erstreckung 30 der Presshülse 14 eine verpressende und damit deformierende Einwirkung auf die Presshülse und in Folge auf das Kunststoffrohr ausübt.

Letztlich wird in Fig. 2d eine B-Kontur 50d dargestellt, die wiederum symmetrisch ausgebildet ist und die wiederum eine Struktur 56d als Positionierungshilfe korrespondierend zu dem Kunststoffelement 20 aufweist. Pressstrukturen 52d sind vorgesehen und wirken zur Verpressung auf die Presshülse 14 ein. Eine prinzipiell für die Verpressung inaktive Oberfläche 54d wird für den Verpressungsvorgang durch die Erstreckungen 30 der Presshülse aktiviert. Die Fig. 2 gibt zu erkennen, dass die Presshülse 14 zwei umfängliche radial auswärts gerichtete Erstreckungen 30 aufweist, die jeweils über einen Bereich der Stützhülse 16 positioniert sind, der eine Ringdichtung trägt, wobei für eine Verpressung durch eine Presskontur eines Presswerkzeuges bestimmte Umfangsflächen der Presshülse 14 in deren Axialrichtung angeordnet sind, die durch einen Pressvorgang plastisch radial einwärts deformierbar sind.

Die Fig. 3 zeigt eine beispielhafte Oberflächenkontur einer Stützhülse 16, wie sie gemäß der Erfindung ausgebildet sein kann. Dementsprechend ist am aufschubseitigen Ende 46 der Stützhülse eine kalibrierende Kontur 48 zu erkennen, deren Außenumfang auf 25,9 mm ansteigt, und zwar für ein aufzuschiebendes Rohr mit einem Durchmesser von 26 mm, wobei innerhalb der Toleranzen Rohrdurchmesser mit 25,8 bis 26,2 mm möglich sind. Eine Kalibrierung tritt hier über die Schräge 48 und den größeren Durchmesser im Anschluss an die Schräge in Aufschubseite des Kunststoffrohres auf. Wie dargestellt, sind die nachfolgenden Zacken 42 in ihrem Durchmesser bzw. in ihrer radialen Erstreckung kleiner dimensioniert, und zwar mit 25,7 mm. Ein Zacken 43 unmittelbar in der Nachbarschaft zu der vorderen O-Ringdichtung ist mit einem geringeren Außendurchmesser bzw. radialen Erstreckung ausgebildet, und zwar hier beispielhaft mit 25,5 mm. Leicht ersichtlich hat die O-Ringdichtung im Anschluss hieran einen größeren Außendurchmesser, im vorliegenden Fall beispielhaft 25,9 mm. Damit steht die O-Ringdichtung sowohl über den erörterten benachbarten Zacken 43 als auch über die davor ausgebildeten Zacken 42 vor.

Im Anschluss an die vordere O-Ringdichtung, die in einer Nut teilweise aufgenommen ist, schließt ein Grat 38b an, der mit einer Nut ausgebildet ist, die eine Tiefe von ca. 3 bis 6 mm haben kann. Diese Rille oder Vertiefung dient dazu, durch die Verpressung verdrängtes Material aufnehmen zu können, dergestalt, dass durch eine Verpressung mit einem der Formbacken gemäß der Fig. 2a bis 2d verdrängtes Material nicht übermäßig stark auf die O-Ringdichtungen einwirkt, um deren übermäßige Verformung oder gar Beschädigung zu vermeiden. Dementsprechend ist auch die geringe radiale Erstreckung des Zackens 43 motiviert. An den umlaufenden Grat 38b schließt eine weitere O-Ringdichtung 34a an, die in eine Nut aufgenommen ist. Die Dimensionierung dieser Bestandteile entspricht der Dimensionierung der entsprechenden voranstehend erörterten Bestandteile. An die O-Ringdichtung 34a schließt ein Grat an, der abgerundete, rechteckige Konturen hat und einen Außendurchmesser aufweist, der dem des Zackens 43 bzw. der maximalen radialen Erstreckung des Grates 38b entspricht. Die nachfolgenden Zacken 36 haben wiederum in etwa die Abmessungen der Zacken 42.

Es ist leicht erkennbar, dass abhängig vom anzuschließenden Rohrdurchmesser die Dimensionen der Stützhülse 16 entsprechend abzuändern sind, wobei wieder entsprechende Fertigungstoleranzen der anzuschließenden Kunststoffrohre bzw. Verbundrohre in Betracht zu ziehen sind um die gewünschte Leckagefunktion zu erzielen. Bevorzugt sollte im Mittel in etwa ein Ringspalt von ca. 1 mm vorgesehen sein, was aber im Hinblick auf die Fertigungstoleranzen für Fertigungsrohre bzw. Verbundrohre relativ schwierig ist. Jedoch ist es möglich, derlei Toleranzen durch eine Druckerhöhung des Mediums innerhalb der Leitung zu überwinden, was in der Praxis vor Inbetriebnahme regelmäßig durchgeführt werden muss. Ein fertiggestelltes Leitungssystem wird nach dem Bau eines Leitungssystems mit Pressverbindungen mit einem Druck von bis zu 10 bar (1 MPa) beaufschlagt, so dass in einem solchen Falle natürlich eine nicht verpresste Verbindung aufgrund der Leckagefunktion jedenfalls undicht wird und sich dem Handwerker zu erkennen gibt.

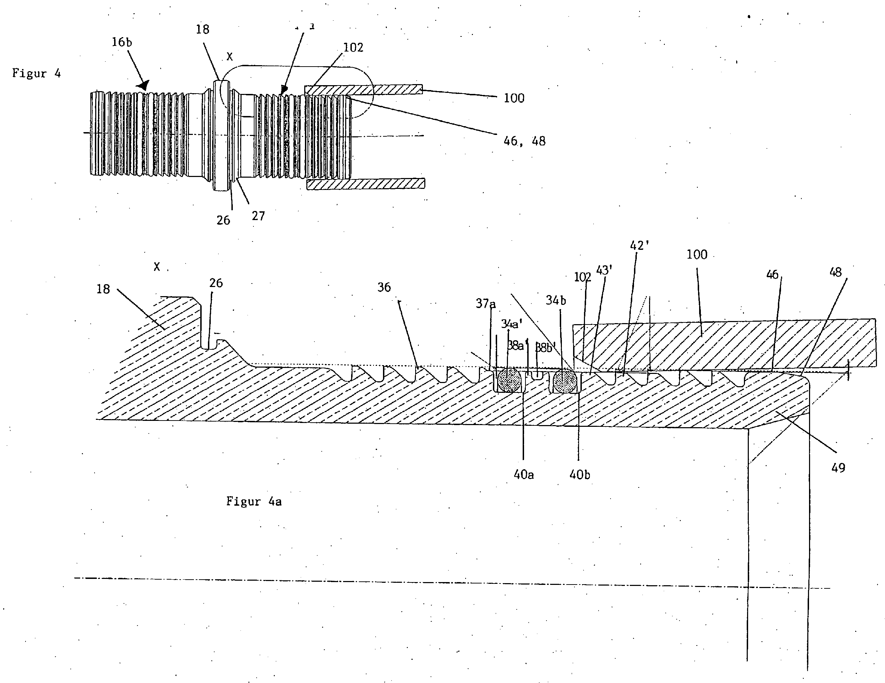

Die Fig. 4 zeigt eine Ausbildung einer Pressverbindung, die im Wesentlichen den vorangehend erörterten Strukturen entspricht. Es ist erkennbar, dass hier eine Kupplung zwei Stützhülsen 16a, 16b aufweist, die aber für sich gesehen jeweils in etwa gleich sind, so dass deren Erörterung erübrigt werden kann. Es soll lediglich darauf hingewiesen werden, dass ein im Aufschieben befindliches Kunststoffrohr an seinem stimseitigen, bereits aufgeschobenen Ende eine Entgratstruktur 2 aufweist, die dazu dient, eine Verletzung der vorstehenden O-Ringe zu vermeiden.

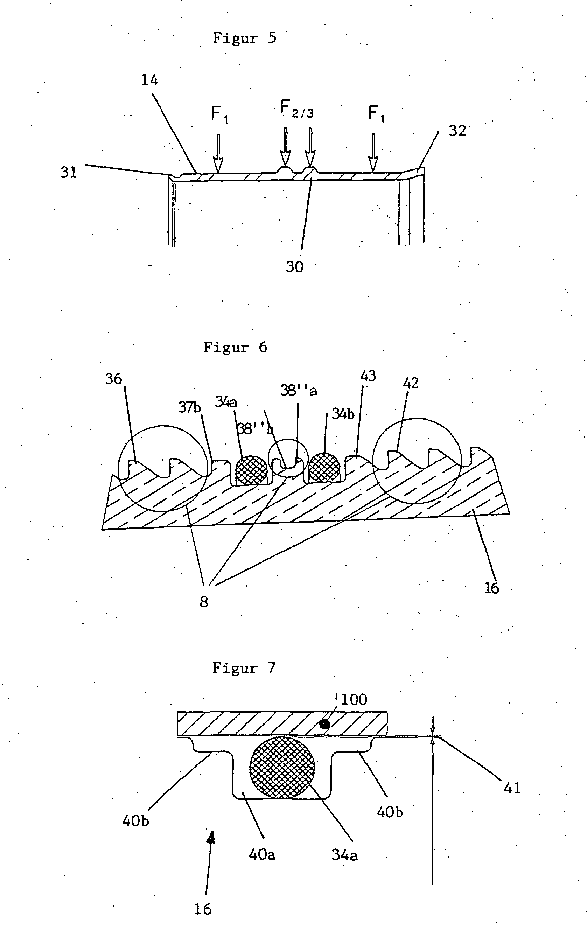

In Fig. 4a ist der Ausschnitt X gemäß Fig. 4 dargestellt, wobei dieser Ausschnitt erkennen lässt, dass die Struktur der Stützhülse 16 im Wesentlichen denen der vorangehenden Strukturen entspricht. Eine Abweichung ist lediglich im Hinblick darauf erkennbar, dass bereits mehrere der Zacken 42', 43' in Aufschubrichtung vor der ersten O-Ringdichtung 34b einen geringeren Durchmesser bzw. eine geringere radiale Erstreckung aufweisen, über die der O-Ring 34b vorsteht. Der Grat 38a' weist eine andere im Längsschnitt hervortretende Kontur auf, wobei der Sinn der größeren Rille 38b' der sein soll, dass bei einer Verformung des Rohres durch den Verpressvorgang mehr Material aufzunehmen ist, um eine übermäßige Verpressung der O-Ringdichtungen 34a', 34b vermeiden zu können. Auch ein der O-Ringdichtung 34a' folgender Zacken 37a ist leicht abgewandelt ausgebildet, indem seine in Aufschubrichtung voreilende Kante einen geringeren Durchmesser bzw. eine geringere radiale Erstreckung aufweist, während die nacheilende Kante zackenartig mit einem größeren Außendurchmesser ausgebildet ist, um einerseits bei der Verpressung ausreichend Material des Kunststoffrohres aufnehmen zu können, und andererseits auch eine Haltekraft entwickeln zu können. Ein den Zacken 36 nachfolgender Bereich ist mit einem geringeren Außendurchmesser ausgebildet, da in diesem Bereich keine Dichtfunktion oder Zugentlastungs- bzw. -haltefunktion mehr aufgebracht werden muss. In der Fig. 5 ist dargestellt, wie Verpressungskräfte auf eine Presshülse 14 einer Pressverbindung gemäß der Erfindung einwirken. Beispielhaft wird zur Erläuterung der Pressbacken 50a gemäß Fig. 2a herangezogen. Wird eine Verpressung durchgeführt, würden normalerweise nur die Presskonturen 52a auf die Presshülse einwirken und zwar entlang der Pfeile F₁. Die Kontur 54a des Pressbackens 50a würde passiv sein. Durch die Ausbildung der radialen Erstreckungen 30 bringt jedoch auch die Kontur 54a des Pressbackens 50a Kräfte auf, die in der Darstellung mit F_{2/3} wiedergegeben ist.

Die Fig. 6 zeigt eine Ausführungsform einer Stützhülse mit wiederum leicht abweichend ausgebildeten Strukturen. Die Strukturen, die gesondert mit dem Bezugszeichen 8 gekennzeichnet sind, dienen dazu, für die unterschiedlich ausgebildeten und zum Einsatz gelangenden Pressbackenkonturen Material des verpressten Rohres aufnehmen zu können, um einerseits eine Fixierung des Rohres und andererseits eine dauerhafte Abdichtung des Rohres ermöglichen zu können, ohne dass die O-Ringdichtungen beschädigt werden. Dementsprechend der Grat 38a" hier leicht abgewandelt ausgebildet und auch die Konturen der Zacken 37b sowie 43 sind leicht abgewandelt ausgebildet. Auch hier stehen die O-Dichtringe mit ihrer äußeren radialen Erstreckung über die äußere radiale Erstreckung der Elemente 37b, 38a", 38b", 43 über, um einerseits die gewünschte Leckagefunktion im verpressten Zustand zu ermöglichen, und andererseits die Aufnahme von Material bei der Verpressung mittels unterschiedlichster Presswerkzeuge bzw. Presszangen zur Vermeiden der Beschädigung der O-Ringdichtungen 34a, 34b bewerkstelligen zu können.

In der Fig. 7 ist nochmals eine abgewandelte Ausbildung dargestellt, bei der eine Rille 40a, die eine Dichtung 34a aufnimmt, mit seitlichen Flanken 40b ausgebildet ist, die dazu dient, Material bei der Verpressung aufnehmen zu können, um eine beschädigungsfreie Verformung der O-Ringdichtung 34a sicherstellen zu können. Hier ist ein Leckagespalt 41 dargestellt, der in etwa 1 mm ausmacht. Er kann aber auch im Bereich von 0 bis 2 mm, jedoch auch mehr oder weniger liegen, wobei dann im entsprechenden Fall ein höherer Druck aufgebracht werden muss, um die Leckagefunktion ausführen zu können.

## Patentansprüche

1. Pressverbindung für Kunststoffrohre mit den folgenden Merkmalen:
- einer Stützhülse (16), auf die ein aufzuschiebendes Rohr (100) aufgeschoben wird,
- einer Presshülse (14), durch deren Verformung das Kunststoffrohr auf der Stützhülse festgelegt wird;
- mit einem Kunststoffrohr (100) oder Kunststoff-Metall-Kunststoff-Verbundrohr, das in einen zylindrischen Spalt zwischen der Stützhülse (16) und der Presshülse (14) eingeführt wird;
- einem Bund mit einem Anschlag am Ende der Stützhülse, gegen den das Kunststoffrohr nach dem Aufschieben mit oder ohne Abstand zu liegen kommt;
- das Kunststoffrohr einen gleichen oder minimal grösseren Innendurchmesser aufweist, verglichen mit dem Außendurchmesser der Stützhülse (16) in einem umfänglichen Bereich der Stützhülse, der axial zur Pressverbindung bzw. der Stützhülse begrenzt ist, so dass dieser auf die Umgebung einer O-Ringdichtung (34a, 34b) begrenzt ist, wobei die O-Ringdichtung einen minimal grösseren Außendurchmesser als die Stützhülse ausserhalb des Bereiches hat,
**dadurch gekennzeichnet, dass** die Stützhülse (16) umfängliche Zacken (42, 36) aufweist, die in der Nachbarschaft zu dem bzw. den O-Ringdichtungen (34a, 34b) eine geringere radiale Erstreckung aufweisen als entfernt von den O-Ringdichtungen.

2. Pressverbindung nach Anspruch 1, **dadurch gekennzeichnet, dass** die Presshülse (14) eine umfängliche radial auswärts gerichtete Erstreckung (30) aufweist, die über dem Bereich der Stützhülse (16) positioniert ist.

3. Pressverbindung nach einem der Ansprüche 2, **dadurch gekennzeichnet, dass** die Stützhülse (16) an ihrem dem Bund (18) abgewandten Ende mit einem Außenumfang (46, 48, 44) ausgestattet ist, der relativ zum Innenumfang des Kunststoffrohres bzw. Verbundrohres grösser ist, um zu dessen Kalibrierung und/oder Entgratung beizutragen.

4. Pressverbindung nach einem der voranstehenden Ansprüche, **dadurch gekennzeichnet, dass** die Presshülse (14) eine äussere Kontur (30) aufweist, die zu einer Anzahl von Pressbacken von Presszangen in Korrespondenz bringbar ist.

5. Pressverbindung nach einem der voranstehenden Ansprüche, **dadurch gekennzeichnet, dass** die Presshülse (14) über ein Halteelement (20) am Bund gehalten wird.

6. Pressverbindung nach einem der Ansprüche 4 oder 5, **dadurch gekennzeichnet, dass** die Presshülse (14) eine wenigstens teilumfängliche, bevorzugt umfängliche Justagekontur (30) aufweist, die dem kontrollierten Ansetzen eines Presswerkzeuges dient.

7. Pressverbindung nach Anspruch 6, **dadurch gekennzeichnet, dass** die Justagekontur (30) eine radiale Erstreckung aufweist, derart, dass die Oberfläche von Pressbacken eines Presswerkzeuges in Kontakt zu der Justagekontur tritt, um einen zur Verpressung der Presshülse (14) im Bereich der Justagekontur dienenden Kontakt herzustellen

8. Pressverbindung nach einem der voranstehenden Ansprüche, **dadurch gekennzeichnet, dass** der umfängliche Bereich der Stützhülse (16) zwei axial beabstandete O-Ringdichtungen (34a, 34b) aufnimmt.

9. Pressverbindung nach Anspruch 8, **dadurch gekennzeichnet, dass** den zwei O-Ringdichtungen (34a, 34b) eine gemeinsame oder jeweilige umfängliche radial auswärts gerichtete Erstreckungen (30) an der Presshülse (14) zugeordnet ist/sind.

10. Pressverbindung nach Anspruch 8 oder 9, **dadurch gekennzeichnet, dass** die zwei O-Ringdichtungen (34a, 34b) in jeweilige umfängliche Nuten (40a, 40b) in der Stützhülse aufgenommen sind, wobei die beiden Nuten durch einen umfänglichen Grat (38; 38a, 38b) getrennt sind, der eine umfängliche Nut aufweist.

11. Pressverbindung nach einem der voranstehenden Ansprüche, **dadurch gekennzeichnet, dass** ein umfänglicher Zacken der Stützhülse (16) in Aufschubrichtung des Kunststoffrohres bzw. Verbundrohres vor der/den O-Ringdichtungen (34a, 34b) in Axialrichtung der Stützhülse wenigstens teilweise eine geringere radiale Erstreckung aufweist als andere umfängliche Zacken der Stützhülse.

12. Pressverbindung nach einem der voranstehenden Ansprüche, **dadurch gekennzeichnet, dass** ein umfänglicher Zacken der Stützhülse (16) in Aufschubrichtung des Kunststoffrohres bzw. Verbundrohres hinter der/den O-Ringdichtungen (34a, 34b) wenigstens teilweise eine geringere axiale Erstreckung aufweist als andere umfängliche Zacken der Stützhülse.

## Claims

1. Press-fit connection for plastics pipes having the following features:
- a support sleeve (16) onto which a pipe (100) to be pushed on is pushed,
- a press-fit sleeve (14) which fastens the plastics pipe to the support sleeve when said sleeve is deformed;
- comprising a plastics pipe (100) or plastics-metal-plastics composite pipe which is introduced into a cylindrical gap between the support sleeve (16) and the press-fit sleeve (14);
- a collar comprising a stop at the end of the support sleeve, against which collar the plastics pipe lies with or without a clearance after it has been pushed on;
- the plastics pipe has an internal diameter which is the same as, or minimally larger by comparison with, the external diameter of the support sleeve (16) in a circumferential region of the support sleeve, which region is axially delimited with respect to the press-fit connection and the support sleeve, such that said region is restricted to the area surrounding an O-ring seal (34a, 34b), the O-ring seal having an external diameter which is minimally larger than the support sleeve outside the region,
**characterised in that** the support sleeve (16) comprises circumferential teeth (42, 36) which have a smaller radial extension in the vicinity of the O-ring seal(s) (34a, 34b) than at a distance from the O-ring seals.

2. Press-fit connection according to claim 1, **characterised in that** the press-fit sleeve (14) has a circumferential extension (30) which is oriented radially outwardly and is positioned over the region of the support sleeve (16).

3. Press-fit connection according to claim 2, **characterised in that** the support sleeve (16) has an external circumference (46, 48, 44) at the end thereof facing away from the collar (18) that is larger than the internal circumference of the plastics pipe or composite pipe in order to contribute to the calibration and/or deburring thereof.

4. Press-fit connection according to any of the preceding claims, **characterised in that** the press-fit sleeve (14) has an external contour (30) which can be brought into correspondence with a number of press-fit jaws of press-fit teeth.

5. Press-fit connection according to any of the preceding claims, **characterised in that** the press-fit sleeve (14) is retained on the collar by a retaining element (20).

6. Press-fit connection according to either claim 4 or claim 5, **characterised in that** the press-fit sleeve (14) has an alignment contour (30) over at least part of the circumference thereof, preferably over the entire circumference thereof, which is used for the controlled positioning of a pressing tool.

7. Press-fit connection according to claim 6, **characterised in that** the alignment contour (30) has a radial extension such that the surface of press-fit jaws of a pressing tool comes into contact with the alignment contour in order to produce contact for pressing the press-fit sleeve (14) in the region of the alignment contour.

8. Press-fit connection according to any of the preceding claims, **characterised in that** the circumferential region of the support sleeve (16) receives two O-ring seals (34a, 34b) which are at an axial distance from one another.

9. Press-fit connection according to claim 8, **characterised in that** one common circumferential extension or respective circumferential extensions (30), which is/are oriented radially outwardly on the press-fit sleeve (14), is/are assigned to the two O-ring seals (34a, 34b).

10. Press-fit connection according to either claim 8 or claim 9, **characterised in that** the two O-ring seals (34a, 34b) are received in respective circumferential grooves (40a, 40b) in the support sleeve, the two grooves being separated by a circumferential burr (38; 38a, 38b) which has a circumferential groove.

11. Press-fit connection according to any of the preceding claims, **characterised in that** a circumferential tooth of the support sleeve (16) has, at least in part, a smaller radial extension in the push-on direction of the plastics pipe or composite pipe in front of the O-ring seal(s) (34a, 34b) in the axial direction of the support sleeve than other circumferential teeth of the support sleeve.

12. Press-fit connection according to any of the preceding claims, **characterised in that** a circumferential tooth of the support sleeve (16) has, at least in part, a smaller axial extension in the push-on direction of the plastics pipe or composite pipe behind the O-ring seal(s) (34a, 34b) than other circumferential teeth of the support sleeve.

## Revendications

1. Raccord à sertissage pour tube en matière plastique présentant les caractéristiques suivantes :
- un manchon de soutien (16) sur lequel un tube (100) à emboîter est emboîté,
- un manchon à sertir (14), dont la déformation fixe le tube plastique sur le manchon de soutien ;
- avec un tube plastique (100) ou un tube composite plastique-métal-plastique qui peut être introduit dans une fente cylindrique entre le manchon de soutien (16) et le manchon à sertir (14) ;
- un épaulement avec une butée à l'extrémité du manchon de soutien, contre laquelle le tube plastique vient se placer avec ou sans écartement après qu'il a été emboîté,
- le tube plastique présente un diamètre intérieur égal ou à peine plus grand, comparé au diamètre extérieur du manchon de soutien (16) dans une zone périphérique du manchon de soutien, qui est limitée axialement par rapport au raccord à sertissage ou au manchon de soutien, de manière que celle-ci soit limitée à l'environnement d'une bague d'étanchéité (34a, 34b), la bague d'étanchéité présentant un diamètre extérieur à peine plus grand que le manchon de soutien à l'extérieur de cette zone,
**caractérisé en ce que** le manchon de soutien (16) comporte des dents (42, 36) périphériques qui présentent, au voisinage de la ou des bagues d'étanchéité (34a, 34b), une extension radiale moindre qu'à distance des bagues d'étanchéité.

2. Raccord à sertissage selon la revendication 1, **caractérisé en ce que** le manchon à sertir (14) présente une extension (30) périphérique dirigée radialement vers l'extérieur qui est positionnée au-dessus de la zone du manchon de soutien (16).

3. Raccord à sertissage selon la revendication 2, **caractérisé en ce que** le manchon de soutien (16) présente à son extrémité tournée à l'opposé de l'épaulement (18), un pourtour extérieur (46, 48, 44) qui est plus grand que le pourtour intérieur du tube plastique ou tube composite, afin de contribuer à son calibrage et/ou ébavurage.

4. Raccord à sertissage selon l'une des revendications précédentes, **caractérisé en ce que** le manchon à sertir (14) présente un contour extérieur (30) qui peut être amené en correspondance avec une pluralité de mâchoires de sertissage de pinces de sertissage.

5. Raccord à sertissage selon l'une des revendications précédentes, **caractérisé en ce que** le manchon à sertir (14) est maintenu sur l'épaulement par un élément de retenue (20).

6. Raccord à sertissage selon l'une des revendications 4 ou 5, **caractérisé en ce que** le manchon à sertir (14) présente un contour d'ajustage (30) au moins en partie périphérique, de préférence périphérique, qui sert à placer de manière contrôlée un outil de sertissage.

7. Raccord à sertissage selon la revendication 6, **caractérisé en ce que** le contour d'ajustage (30) présente une extension radiale telle que la surface de mâchoire de sertissage d'un outil de sertissage vienne en contact avec le contour d'ajustage, pour réaliser un contact servant au sertissage du manchon à sertir (14) dans la zone du contour d'ajustage.

8. Raccord à sertissage selon l'une des revendications précédentes, **caractérisé en ce que** la zone périphérique du manchon de soutien (16) reçoit deux bagues d'étanchéité (34a, 34b) distantes axialement.

9. Raccord à sertissage selon la revendication 8, **caractérisé en ce qu'**une extension (30) périphérique, commune ou propre, dirigée radialement vers l'extérieur sur le manchon à sertir est associée aux deux ou à chacune des bagues d'étanchéité (34a, 34b).

10. Raccord à sertissage selon la revendication 8 ou 9, **caractérisé en ce que** les deux bagues d'étanchéité (34a, 34b) sont reçues dans des rainures périphériques respectives (40a, 40b) dans le manchon de soutien, les deux rainures étant séparées par une bavure périphérique (38 ; 38a, 38b), qui présente une rainure périphérique.

11. Raccord à sertissage selon l'une des revendications précédentes, **caractérisé en ce qu'**une dent périphérique du manchon de soutien (16) présente, devant la ou les bagues d'étanchéité (34a, 34b), dans le sens d'emboîtement du tube plastique ou tube composite, dans la direction axiale du manchon de soutien, au moins en partie, une extension radiale moindre que d'autres dents périphériques du manchon de soutien.

12. Raccord à sertissage selon l'une des revendications précédentes, **caractérisé en ce qu'**une dent périphérique du manchon de soutien (16) présente dans le sens d'emboîtement du tube plastique ou tube composite, derrière la ou les bagues d'étanchéité (34a, 34b), au moins en partie, une extension axiale moindre que d'autres dents périphériques du manchon de soutien.
